Europäisches Patentamt

European Patent Office

Office européen des brevets

(11) Veröffentlichungsnummer: **0 217 418**
**B1**

# EUROPÄISCHE PATENTSCHRIFT

(45) Veröffentlichungstag der Patentschrift:
14.11.90

(51) Int. Cl.⁵: **A01D 75/18**

(21) Anmeldenummer: 86113782.6

(22) Anmeldetag: 04.10.86

(54) Fremdkörpererkennungseinrichtung für landwirtschaftliche Erntemaschinen.

(30) Priorität: 04.10.85 DD 281454

(43) Veröffentlichungstag der Anmeldung:
08.04.87 Patentblatt 87/15

(45) Bekanntmachung des Hinweises auf die Patenterteilung:
14.11.90 Patentblatt 90/46

(84) Benannte Vertragsstaaten:
AT BE CH DE FR GB IT LI NL SE

(56) Entgegenhaltungen:
EP-A- 0 152 291
DD-A- 110 413
DD-A- 114 893
DE-A- 3 213 713
GB-A- 1 602 475

(73) Patentinhaber: VEB KOMBINAT FORTSCHRITT
LANDMASCHINEN, Berghausstrasse 1,
DDR-8355 Neustadt in Sachsen(DD)

(72) Erfinder: 1Weiss, Burkhard, ASS 12,
DDR-8701 Weigsdorf-Köblitz(DD)
Erfinder: Hausschild, Arthur, Hohnsteiner Strasse 17,
DDR-8360 Sebnitz(DD)
Erfinder: Herrmann, Erich, Mittelweg 196,
DDR-8351 Polenz(DD)

(74) Vertreter: Zipse + Habersack, Kemnatenstrasse 49,
D-8000 München 19(DE)

## Beschreibung

Die Erfindung betrifft eine Fremdkörpererkennungseinrichtung für landwirtschaftliche Erntemaschinen mit einer das Erntegut zu einem Erntegutstrang verdichtenden Fördervorrichtung und einer Datenerfassungs- und Auswerteeinheit, die mit einer Stoppeinrichtung der Fördervorrichtung oder einer Warneinrichtung verbunden ist.

Bei Feldhäckslern und Mähdreschern sind verschiedenartige Fremdkörpererkennungseinrichtungen bekannt geworden, die die Arbeitsorgane vor der Beschädigung durch Steine und Metallteile, die mit dem Erntegut zusammengeführt werden, sichern sollen. Im Mähdrescherschacht sind hierfür z.B. Steinfangmulden und Steinabschneider bekannt. Diese Lösungen funktionieren nur bei dünnen Erntegutsträngen, die über eine relativ lange Strecke gleichmäßig gefördert werden.

Im Feldhäcksler sind einerseits Metallortungseinrichtungen bekannt geworden, bei denen in einer feststehenden Zuführwalze ein elektrisches Erkennungssystem eingebaut ist (z.B. nach der DE-A 2 252 595 und 2 552 805).

Über eine Datenerfassungs- und Auswerteeinheit wird die Feldstärkeänderung im elektrischen Erkennungssystem beim Durchgang eines Metallteiles zur Betätigung einer Stoppeinrichtung für die Fördervorrichtung oder für eine Warneinrichtung benutzt. Diese Metallortungseinrichtungen können jedoch durch ihre spezifische Konstruktion keine nichtmetallischen Fremdkörper, vor allem Steine, feststellen und bieten somit keinen allseitigen Schutz.

Weiterhin sind Lösungen bekannt, bei denen über mechanische Tastvorrichtungen der Erntegutstrang zwischen den Zuführwalzen der Fördereinrichtung nach Fremdkörpern abgesucht wird und diese über verschiedene Mechanismen entfernt werden sollen (z.B. nach der DD-A 110 413 und 116 553). Es hat sich jedoch gezeigt, daß diese Lösungen in der Praxis nicht einsatzfähig sind, da bei ihnen der Fördervorgang so negativ beeinflußt wird, daß die Erntegutdurchsätze sehr gering werden. Weiterhin sind diese mechanischen Lösungen zu aufwendig in der Herstellung. Ferner sind weitere Lösungen nach der DD-A 117 030 und nach der DD-A 120 782 bekannt, bei denen die Lageänderung von Teilen der Zuführeinrichtung elektrisch ausgewertet wird, um so Fremdkörper zu erkennen. Auch hier zeigte sich in der Praxis, daß diese Lageänderungen keine hinreichend genaue Aussage über Fremdkörper liefert, da durch den ungleichmäßigen Einzug des Erntegutes bereits Lageänderungen über einen großen Bereich erfolgen. Des weiteren ist es nach der DD-PS 114 893 bekannt, den Erntegutstrang vor der Fördereinrichtung zu durchleuchten. Nachteilig an dieser Lösung ist, daß sehr große Lichtleistungen notwendig sind, um den dichten Erntegutstrang zu durchleuchten. Damit steigt im Welkgut die Brandgefahr gleichzeitig stark an, so daß auch diese Lösung in der Praxis nicht anwendbar ist.

Eine weitere Lösung gemäß der DD-A 111 534 sieht vor, daß vor der Fördervorrichtung im Bereich einer Querförderschnecke eine Vielzahl von elektromechanischen Tastern vorgesehen sind, die einen Stromkreis für eine Stoppeinrichtung bzw. Fremdkörperentfernungseinrichtung bestätigen.

Nachteilig ist hier, daß die aufgenommenen Fremdkörper im Erntegutstrang, der durch die Querförderschnecke zusammengeführt und dabei in sich verfilzt und verdreht wird, eingebettet werden und damit nicht mit den Tastern so in Berührung kommen, daß der Stromkreis geschlossen wird.

Nach der DE-A 3 213 713 ist ein Erkennungsgerät für Steine in Erntemaschinen bekannt. Hier wird vorgeschlagen, daß in eine Zuführwalze als Fördervorrichtung an der Innenfläche des Mantels eine Vielzahl von piezoelektrischen Gebern angebracht sind, die die Schallsignale der Steine beim Auftreffen auf die Fördervorrichtung in elektrische Impulse umwandeln. Die Abnahme der elektrischen Impulse erfolgt mittels spezieller Schleifringe in der Stirnseite der Zuführwalze. Anschließend werden die elektrischen Impulse einer Datenerfassungs- und Auswerteeinheit zugeleitet, über die dann eine Stoppeinrichtung für die Fördervorrichtung betätigt wird.

Nachteilig an dieser Lösung ist der sehr hohe fertigungstechnische Aufwand. Es bereitet sehr große Schwierigkeiten, die piezoelektrischen Geber gegenüber dem Maschinenschall geschützt anzubringen. Hierfür sind aufwendige Abschirmmaßnahmen an der Zuführwalze notwendig. Weiterhin ist ein spezieller Schleifring notwendig, der besonders gut gegen Erntegut und dessen aggressiven Saft geschützt sein muß. Letztlich besteht die Gefahr, daß Steine im Erntegutstrang so eingebettet liegen, daß kein unmittelbarer Kontakt mit der Fördervorrichtung entsteht und somit das spezifische Schallsignal ausbleibt.

Nach der europäischen Patentanmeldung 0 152 291 ist es bekannt, an einer schnellaufenden Erntegutaufnahmevorrichtung eine Fremdkörpererkennungseinrichtung anzubringen. Hierzu ist im Abstand zur rotierenden Aufnahmetrommel eine Erntegutführungshaube angeordnet, die gleichzeitig als Prallblech für die Fremdkörpererkennungseinrichtung dient. Das relativ lockere Erntegut wird durch die Aufnahmetrommel derart beschleunigt, daß es gegen die Erntegutführungshaube geworfen wird. Da das Erntegut bei der Aufnahme noch nicht mehrfach zusammengeführt und in der Bewegungsrichtung umgekehrt wurde, besteht kein in sich verfilzter Strang, so daß eingelagerte Fremdkörper aufgrund der höheren kinetischen Energie aus dem Erntegut an die Erntegutführungshaube gelangen. Der Aufprall der Fremdkörper wird über piezoelektrische Geber oder feine Beschleunigungsmesser zur Erzeugung eines für die Steuerung einer Auswurfklappe verwertbaren Signales ausgenutzt.

Diese Lösung kann aber auf die Zuführvorrichtung von Feldhäckslern oder Mähdreschern, wo das Erntegut über einen Querförderer nach dem Mähen oder Aufnehmen auf die Breite des Arbeitsorganes der Häckseleinrichtung bzw. der Drescheinrichtung zusammengeführt wurde und von der Zuführeinrichtung unter einer nochmaligen Transportrichtungsänderung übernommen wird, nicht übertragen werden.

Wie bereits bei der Lösung nach der DD-A 111 534 dargestellt, besteht in der Zuführeinrichtung derartiger Erntemaschinen ein relativ stark verfilzter und vorverdichteter Erntegutstrang, aus dem eingebettete Fremdkörper kaum gegen Prallbleche gelangen. Somit ist keine Sicherheit der Fremdkörpererkennung gegeben. Durch die vorliegende Erfindung soll hier Abhilfe geschaffen werden.

Deshalb liegt der Erfindung die Aufgabe zugrunde, eine Fremdkörpererkennungseinrichtung für landwirtschaftliche Erntemaschinen mit einer das Erntegut zu einem Erntegutstrang verdichtenden Fördervorrichtung und einer Datenerfassungs- und Auswerteeinheit, die mit einer Stoppeinrichtung der Fördervorrichtung oder einer Warneinrichtung verbunden ist, zu schaffen, mit der insbesondere Fremdkörper erkannt werden, wenn diese im Erntegutstrang so eingebettet sind, daß sie nicht unmittelbar mit der Fördervorrichtung in Berührung kommen.

Erfindungsgemäß wird die Aufgabe dadurch gelöst, daß an einem senkrecht zur Förderrichtung beweglichen und in Richtung auf den Erntegutstrang drückenden Teil der Fördervorrichtung ein Beschleunigungsmesser angebracht ist, dessen Meßrichtung in der Richtung der Verschiebung des beweglichen Teils der Fördervorrichtung liegt und der mit der Datenerfassungs- und Auswerteeinrichtung in Wirkverbindung steht.

Der bewegliche Teil der Fördervorrichtung verdichtet das Erntegut senkrecht zu seiner Förderrichtung. Durch eine ungleichmäßige Zufuhr des Erntegutes kommt es dabei zu einem Schwingen des beweglichen Teiles, wobei die auftretenden Beschleunigungen in der Verschieberichtung relativ gering sind, da das Erntegut stark verdichtbar ist. Ist ein Fremdkörper in das Erntegut eingelagert, so tritt ein plötzlicher Stoß mit einer schnellen Ausweichbewegung und somit einer großen Beschleunigung des beweglichen Teiles ein, da der Fremdkörper im Gegensatz zum Erntegut nicht verdichtbar ist. Über den Beschleunigungsmesser werden die Beschleunigungswerte festgestellt. Die Meßwerte werden mit einer Ansprechschwelle, die der Größe der normalen Beschleunigungswerte, die durch den unregelmäßigen Durchgang des Erntegutes ohne eingelagerte Fremdkörper entstehen, entspricht, verglichen und in einer in bekannter Weise ausgeführten Elektronikeinheit so weiterverarbeitet, daß damit der Steuerkreis einer Stoppeinrichtung für die Fördervorrichtung beaufschlagt werden kann oder eine Warneinrichtung angesteuert wird. Das Vergleichen mit der Ansprechschwelle kann dabei einerseits erfolgen, indem der Beschleunigungsmesser so eingestellt ist, daß nur die über der Ansprechschwelle liegenden Beschleunigungen in ein Meßsignal umgewandelt werden und an die Datenerfassungs- und Auswerteeinheit weiter gegeben werden. Zum anderen können aber auch alle Beschleunigungen gemessen werden und erst in der Datenerfassungs- und Auswerteeinheit mit einem festgesetzten Signal bestimmter Größe verglichen werden. Als Beschleunigungsmesser sind die in unterschiedlichster Art bekannten Geräte verwendbar.

In der weiteren Ausgestaltung der Erfindung ist es zweckmäßig, wenn in der Erntemaschine bereits eine Metallortungseinrichtung mit zugehöriger Datenerfassungs- und Auswerteeinheit, die eine Stoppeinrichtung für die Fördervorrichtung ansteuert, so wie sie bei Feldhäckslern bekannt ist, vorhanden ist, daß dann der Beschleunigungsmesser parallel zum Geber der Metallortungseinrichtung an deren Datenerfassungs- und Auswerteeinheit angeschlossen ist. Nach der Erfindung ist es sinnvoll, daß der Beschleunigungsmesser an einer Zuführwalze befestigt ist, wobei die Zuführwalze in Schwingen aufgenommen ist und Zugfedern zwischen den Schwingen und einem Gestell angeordnet sind. Die Zugfedern ziehen die Zuführwalze gegen den Erntegutstrang. Letztlich ist es auch möglich, daß das bewegliche Teil nicht unmittelbar Bestandteil der Fördervorrichtung ist, sondern zusätzlich zur Fördervorrichtung angeordnet ist. Dies ist insbesondere bei Erntemaschinen mit starren Schrägförderern, wie z.B. bei Mähdreschern, notwendig.

Die erfindungsgemäße Fremdkörpererkennungsvorrichtung kann separat zum Erkennen von magnetischen und nichtmagnetischen Fremdkörpern ab einer bestimmten Größe eingesetzt werden. Sie kann aber auch mit einer Metallortungseinrichtung, wie dargestellt, kombiniert werden. Damit kann der Schutz der Erntemaschine erhöht werden. Über die Metallortungseinrichtung werden alle magnetischen Schadteile bis zu kleinsten Abmessungen erfaßt. Mit der Fremdkörpererkennungsvorrichtung werden zusätzlich alle übrigen Schadteile, vor allem Steine, erfaßt, die auf Grund ihrer Größe in der Erntemaschine oder der Nachfolgetechnik einen Schaden erzeugen können.

Gegenüber der bekannten Lösung nach DE-A 3 213 713 ist die erfindungsgemäße Lösung sehr einfach im Aufbau, bedarf keinerlei zusätzlicher Schutzmaßnahmen und ist äußerst robust und störunanfällig, wodurch eine Eignung für landwirtschaftliche Erntemaschinen erreicht wird.

Im folgenden wird die Erfindung an einem Ausführungsbeispiel näher erläutert. In der zugehörigen Zeichnung ist eine teilweise geschnittene Seitenansicht eines Häckselaggregates eines Feldhäckslers dargestellt.

Im Gestell 1 ist eine Häckseltrommel 2 gelagert, die mit den Messern 3 im Zusammenwirken mit einer Gegenschneide 4 das Erntegut schneidet. Zum Zuführen des Erntegutes ist der Häckseltrommel 2 eine Fördervorrichtung 5 vorgelagert. Die Fördervorrichtung 5 besitzt einen unteren im Rahmen 6 feststehenden Teil und einen oberen, zum Rahmen 6 beweglichen Teil. Der feststehende Teil besteht aus drei Zuführwalzen 7; 7', die in Lagern 8 im Rahmen 6 aufgenommen sind. Von der letzten Zuführwalze 7 wird das Erntegut über einen Abstreifer 9 zur Gegenschneide 4 geleitet. In der vordersten Zuführwalze 7' ist ferner ein Geber 10 einer Metallortungseinrichtung eingebaut. Dieser Geber 10 ist über ein Kabel 11 mit einer elektronischen Datenerfassungs- und Auswerteeinheit 12 verbunden, die den Steuerkreis einer Stoppeinrichtung 13 für die Fördervorrichtung 5 ansteuert. Der bewegliche Teil der Fördervorrichtung 5 besteht aus zwei Zuführwalzen 14; 14', die in Schwingen 15; 15' gelagert sind. Die erste Schwinge 15 verbindet die zwei Zuführwalzen 14; 14', die zweite Schwinge 15' ist am Gestell 1 gelagert. Zur Verdichtung des Erntegutes sind zwischen den Schwingen 15; 15' und dem Rahmen 6 Zugfedern 16 angelenkt, die die Zuführwalzen 14; 14' in Richtung der unteren Zuführwalzen 7; 7' vorspannen. Damit drücken die Zuführwalzen 14; 14' auf das in der Fördervorrichtung 5 befindliche Erntegut. An der Lagerstelle 17 der vorderen beweglichen Zuführwalze 14 an der Schwinge 15 ist ferner ein Halter 18 angebracht, in dem ein Beschleunigungsmesser 19 befestigt ist. Die Meßrichtung des Beschleunigungsmessers 19 liegt dabei in der Richtung der Verschiebung der Zuführwalze 14. Das Anschlußkabel 20 des Beschleunigungsmessers 19 ist letztlich am Eingang der Datenerfassungs- und Auswerteeinheit 12 parallel zum Kabel 11 des Gebers 10 der Metallortungseinrichtung angeklemmt.

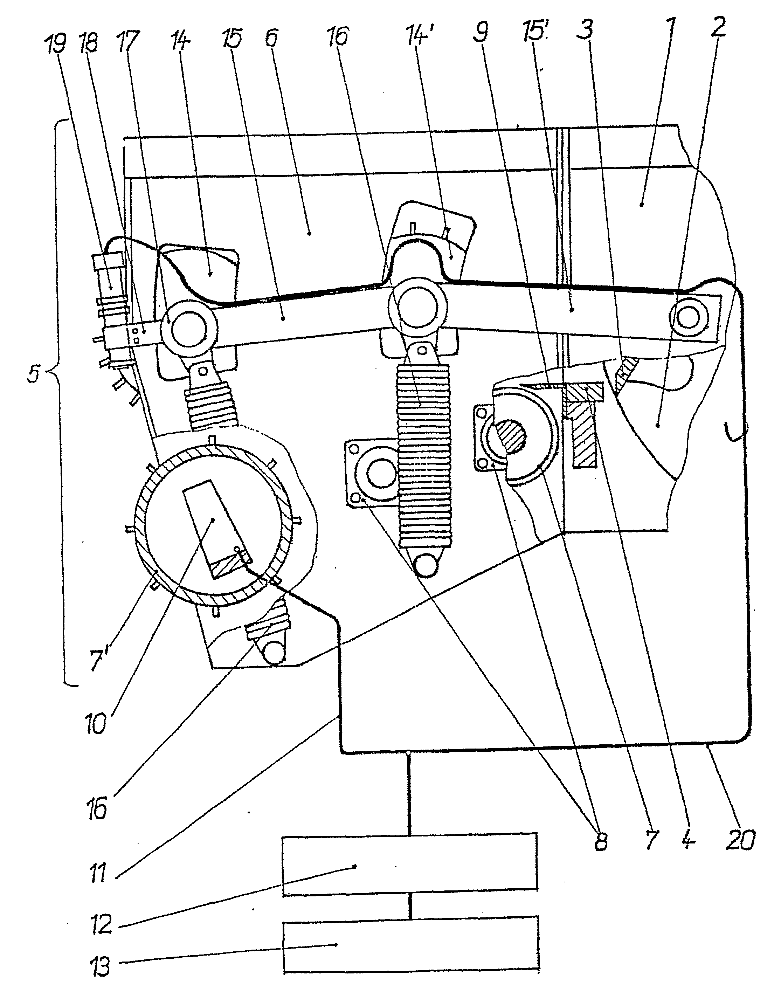

**Patentansprüche**

1. Fremdkörpererkennungsvorrichtung für landwirtschaftliche Erntemaschinen mit einer das Erntegut zu einem Erntegutstrang verdichtenden Fördervorrichtung (5) und einer Datenerfassungs- und Auswerteeinheit (12), die mit einer Stoppeinrichtung (13) der Fördereinrichtung (5) oder einer Warneinrichtung verbunden ist, dadurch gekennzeichnet, daß an einem senkrecht zu Förderrichtung beweglichen und in Richtung auf den Erntegutstrang drückenden Teil der Fördervorrichtung (5) ein Beschleunigungsmesser (19) angebracht ist, dessen Meßeinrichtung in der Richtung der Verschiebung des beweglichen Teiles der Fördervorrichtung (5) liegt und der mit der Datenerfassungs- und Auswerteinheit (12) in Wirkverbindung steht.

2. Fremdkörpererkennungsvorrichtung nach Anspruch 1, dadurch gekennzeichnet, daß der Beschleunigungsmesser (19) parallel zum Geber (10) einer Metallortungseinrichtung (10) an deren Datenerfassungs- und Auswerteeinheit (12) angeschlossen ist.

3. Fremdkörpererkennungsvorrichtung nach Anspruch 1 oder 2, dadurch gekennzeichnet, daß der Beschleunigungsmesser (19) an einer Zuführwalze (14) befestigt ist, wobei die Zuführwalze (14) in Schwingen (15, 15') aufgenommen ist und Zugfedern (16) zwischen den Schwingen (15, 15') und einem Gestell (1) angeordnet sind.

**Claims**

1. Device for detecting foreign bodies for agricultural harvesting machines comprising a feeding device (5) extruding the harvest material and a data aquisition – and analyser unit (12), connected to a stopping device (13) of the feeding device (5) or to a warning device, characterized in that an acceleration meter (19) is mounted to the part of the feeding device (5) movable perpendicular to the feeding direction and pressing in the direction to the strand of harvest material, said acceleration meter being adjusted with its measurement direction in the shift direction of the movable part of the feeding device (5) and being in an active connection to the data aquisition – and analyser unit (12).

2. Device for detecting foreign bodies of claim 1, characterized in that the acceleration meter (19) is connected parallel to the transmitter (10) of a metal detecting device (10) to its data aquisition – and analyser device.

3. Device for detecting foreign bodies of claim 1 or 2, characterized in that the acceleration meter (19) is mounted to a feeding roller (14), whereby the feeding roller (14) is mounted in rocker arms (15, 15') and tension springs (16) are arranged between the rocker arms (15, 15') and a frame (1).

**Revendications**

1. Dispositif de détection des corps étrangers pour les machines agricoles de récolte, comprenant un dispositif de déplacement (5) qui comprime le produit récolté en un boudin de produit récolté et une unité de saisie et d'exploitation des données (12) qui est reliée à un dispositif d'arrêt (13) du dispositif de déplacement (5) ou à un dispositif avertisseur, caractérisé par le fait que, sur une partie du dispositif de déplacement (5) qui est mobile perpendiculairement à la direction de déplacement et qui exerce une pression dans la direction du boudin de produit récolté, est monté un accéléromètre (19) dont la direction de mesure est située dans la direction du déplacement de la partie mobile du dispositif de déplacement (5) et qui est relié de manière opérationnelle à l'unité de saisie et d'exploitation des données (12).

2. Dispositif de détection des corps étrangers selon la revendication 1, caractérisé par le fait que l'accéléromètre (19) est relié en parallèle au capteur (10) d'un dispositif de repérage des métaux (10) sur son unité de saisie et d'exploitation des données (12).

3. Dispositif de détection des corps étrangers selon la revendication 1 ou 2, caractérisé par le fait que l'accéléromètre (19) est fixé à un cylindre d'amenée (14), cependant que le cylindre d'amenée (14) est monté dans des balanciers (15, 15'), et que des ressorts de traction (16) sont disposés entre les balanciers (15, 15') et un bâti (1).

EP 0 217 418 B1